# EUROPEAN PATENT SPECIFICATION

(11) **EP 2 254 922 B1**
(45) Date of publication and mention of the grant of the patent: **21.08.2013**
(21) Application number: 09723001.5
(22) Date of filing: 16.03.2009
(51) Int. Cl.: C08G 65/332, C08L 71/02, C08G 18/08, C08G 18/67, C08L 75/16, C09D 175/16, C09D 11/10

(54) **AQUEOUS RADIATION CURABLE POLYURETHANE COMPOSITIONS**
STRAHLENHÄRTBARE WÄSSRIGE POLYURETHANZUSAMMENSETZUNGEN
COMPOSITIONS AQUEUSES DE POLYURÉTHANE DURCISSABLES PAR RAYONNEMENT

(30) Priority: 18.03.2008 US 64645 P
(43) Date of publication of application: 01.12.2010
(73) Proprietor: Cytec Surface Specialties, S.A., 1070 Brussels (BE)
(72) Inventor: SEECHARAN, Andrew, Marietta Georgia 30064 (US); SMITH, James C., Dallas Georgia 30132 (US)
(74) Representative: Schoofs, Hilde
(86) International application number: PCT/EP2009/053075
(87) International publication number: WO 2009/115489

(56) References cited:
- US-A1- 2004 115 561

## Description

The invention relates to aqueous radiation-curable polyurethane compositions especially suitable for making inks and overprint varnishes.

Radiation curable aqueous compositions for making printing inks have been described before. It is well known that the presence of water in an energy-cured ink or coating can reduce hardness, lead to film transfer or blocking and cause reduced gloss by the phenomenon of blushing. US 6,772,683 describes the use of water-based energy curable inks comprising a mixture of different water-soluble acrylated acrylics. WO 2006/110784 describes a radiation curable composition comprising those types of ethylenically unsaturated oligomers and a resin not containing energy curable functional groups. US 2004/115561 discloses an energy curable varnish composition comprising: (a) water-dilutable ethylenically unsaturated reactive oligomers and monomers; (b) water dispersible ethylenically unsaturated reactive oligomers and monomers. At paragraphs [0016] and [0022], it is specified that the water-dilutable ethylenically unsaturated resin (a) can be a polyurethane acrylate or methacrylate and contains pendant carboxylic groups (see also structure at p.2). As a second component, a water-dispersible dipentaerithrytol tetraacrylate is used. While the methods described in these patent applications might be suitable for wet trapping technologies, the products described therein produce ink films which are not dry to the touch, especially when used on high speed printing equipment. As a consequence the printed ink films will smear or smudge on printing equipment where the printed ink film must traverse a guide or tension roller before being exposed to actinic radiation for cure. The products described therein are therefore not suitable for being used on printing equipment where the printed ink must traverse a guide or tension roller before being exposed to actinic energy for cure, such as on in-line or stack, narrow-web and mid-web flexographic presses and on gravure presses.

Moreover, most of the waterborne inks show a poor long term viscosity stability and resistance to phase separation and may over time lead to imperfections in print quality. We now have found new compositions which do not present these drawbacks. The compositions according to the invention provide extended press and print stability with relatively low printing viscosity and with gloss and resistance properties superior to known waterborne compositions.

Therefore the present invention relates to aqueous radiation-curable composition comprising :
- from 5 to 95 % by weight, relative to the total weight of (A) and (B), of at least one water-dilutable (meth)acrylated urethane (A) containing at least one polyethylene glycol segment and at least one pendant hydrophilic group, and
- from 5 to 95 % by weight, relative to the total weight of (A) and (B), of at least one other (meth)acrylated compound (B) selected from the group of water-dispersible (meth)acrylated polyurethanes (B1), water-dilutable (meth)acrylates (B2) different from the (meth)acrylated urethane (A), and mixtures thereof.

In the present invention, the term "(meth)acryl' is to be understood as to encompass both acryl and methacryl compounds or derivatives as well as mixtures thereof. Acrylated compounds are preferred.

By water-dilutable (meth)acrylated urethane (A) is meant to designate in the present invention a compound that permits to form a homogeneous, single phase mixture when the compound is mixed with water over a concentration range of 5 to 75 wt % of water in the total mass of water and the compound (A).

By water-dispersible (meth)acrylated polyurethane (B1) is meant to designate in the present invention a polymer that, when mixed with water, forms a two-phase system of small particles dispersed in water.

The water-dilutable (meth)acrylated urethane (A) is generally obtained from the reaction of at least one polyisocyanate compound (i), at least one polyol (ii), preferably a polyester polyol (vi), comprising at least one polyethylene glycol segment and at least one pendant hydrophilic group, and at least one (meth)acrylated compound (iv) containing at least one reactive group capable to react with isocyanate groups. Preferred are water dilutable (meth)acrylated aliphatic urethanes.

The polyester polyol (vi) is preferable water-dilutable. Water-dilutable polyester polyols have been described for example in US 5,006,598 and WO 94/28043. The polyester polyol (vi) more preferably has a molecular weight of about 200 to 5000. The polyester polyol (vi) is more preferably obtained from the reaction of at least one polyethylene glycol, at least one polyacid and at least one compound containing at least one hydrophilic group, and optionally at least one other polyol. By hydrophilic group is meant to designate a group that is either ionic, such as for example a carboxylate or sulfonate group, or that becomes ionic after reaction with a neutralizing agent forming a salt, such as a carboxylic acid, sulfonic acid, amino group.

The polyethylene glycol preferably has a molecular weight of from 200 to 2000, more preferably of at least 400. Particularly preferred are polyester polyols which contain from 20 to 80 % by weight, more preferably from 40 to 80 % by weight, of polyethylene glycol segments and from 5 to 20 %, more preferably from 5 to 15 %, by weight of a compound containing at least one hydrophilic group, especially sodium sulfoisophthalic acid, 2,2-dimethylolpropionic acid and 2,2-dimethylolbutanoic acid and/or alpha, omega-polypropylenglycol-diamine-sulfopropylated, sodium salt. Water-dilutable (meth)acrylated urethanes are known since long. Suitable water-dilutable (meth)acrylates are for example those that have been commercialized under the name of UCECOAT®6558, UCECOAT®6559, EBECRYL®2002 and EBECRYL®2003.

Water-dispersible (meth)acrylated polyurethanes (B1) are known since long. They are generally obtained from the reaction of :
- at least one polyisocyanate compound (i'),
- optionally, at least one polyol (ii'),
- at least one hydrophilic compound (iii) containing at least one reactive group capable to react with isocyanate groups and which is capable to render the polyurethane dispersible in aqueous medium either directly or after the reaction with a neutralizing agent to provide a salt,
- at least one (meth)acrylated compound (iv') containing at least one reactive group capable to react with isocyanate groups.
   They are more preferably obtained by a process comprising
- a first step comprising the reaction of compounds (i), (ii') and (iii) and
- a second step, comprising the reaction of the product of the first step with a compound (iv') so that an end-capped ethylenically unsaturated polyurethane is obtained;
- the dispersion in an aqueous medium of said end-capped ethylenically unsaturated polyurethane obtained after the second step,
- an optional step comprising the reaction with a neutralizing agent in order to convert the hydrophilic groups provided by compound (iii) into anionic salts,
- an optional step wherein the ethylenically unsaturated polyurethane obtained after the second step is reacted with a chain extender (vii).

Suitable neutralizing agents include volatile organic tertiary amines such as trimethylamine, triethylamine, triisopropylamine, tributylamine, N,N-dimethylcyclohexylamine, N,N-dimethylaniline, N-methylmorpholine, N-methylpiperazine, N-methylpyrrolidine and N-methylpiperidine and non-volatile inorganic bases comprising monovalent metal cations, preferably alkali metals such as lithium, sodium and potassium and anions such as hydroxides, hydrides, carbonates and bicarbonates that do not remain in the dispersion as such.

Suitable water-dispersible (meth)acrylated polyurethanes (B1) are for example those that have been commercialized under the names of UCECOAT®7155, UCECOAT®7177, UCECOAT®7570, UCECOAT®7571, UCECOAT®7578, UCECOAT®7655, UCECOAT®7674, UCECOAT®7689, UCECOAT®7770, UCECOAT®7772, UCECOAT®7773, UCECOAT®7825 and UCECOAT®7849. By polyisocyanate compounds (i) and (i') are meant to designate organic compounds comprising at least two isocyanate groups. The polyisocyanate compound usually comprises not more than three isocyanate groups. The polyisocyanate compound (i) is most preferably a di-isocyanate.

The polyisocyanate compound is generally selected from aliphatic, cycloaliphatic, aromatic and/or heterocyclic polyisocyanates or combinations thereof.

Examples of aliphatic and cycloaliphatic polyisocyanates are 1,6-diisocyanatohexane (HDI), 1,1'-methylene bis[4-isocyanatocyclohexane] (H12MDI), 5-isocyanato-1-isocyanatomethyl-1,3,3-trimethylcyclohexane (isophorone diisocyanate, IPDI). Aliphatic polyisocyanates containing more than two isocyanate groups are for example the derivatives of above mentioned diisocyanates like 1,6-diisocyanatohexane biuret and trimer.

Examples of aromatic polyisocyanates are 1,4-diisocyanatobenzene (BDI), 2,4-diisocyanatotoluene (TDI), 1,1'-methylenebis[4-isocyanatobenzene] (MDI), xylilene diisocyanate (XDI), tetramethylxylilene diisocyanate (TMXDI), 1,5-naphtalene diisocyanate (NDI), tolidine diisocyanate (TODI) and p-phenylene diisocyanate (PPDI). In the water-dilutable (meth)acrylated polyurethane pre-polymer (A), preferably aliphatic and cycloaliphatic polyisocyanates are used, especially IPDI.

By polyol (ii') is meant to designate a polyol comprising at least two hydroxyl groups and having a number average molecular weight of at least 400. The polyol (ii') preferably has a number average molecular weight which does not exceed 5000, preferably not 1000.

Examples of such polyols are polyester polyols, polyether polyols, polycarbonate polyols and polyacrylate polyols, as well as combinations thereof.

Polyester polyols are particularly preferred, especially the hydroxyl terminated reaction products of polyhydric, preferably dihydric, alcohols with polycarboxylic, preferably dicarboxylic, acids or their corresponding anhydrides, as well as those obtained from the ring opening polymerization of lactones. Particularly preferred are polyester polyols made from the polycondensation of neopentylglycol and adipic acid and/or isophthalic acid.

In addition to the high molecular weight polyol (ii'), a low molecular weight polyol can also be added during the synthesis of the prepolymer (B1). By low molecular weight polyol is meant to designate a polyol comprising at least two hydroxyl groups and having a molecular weight lower than 400.

The hydrophilic compound (iii) is generally a polyol comprising a functional group that can exhibit an ionic or non-ionic hydrophilic nature. Preferably it is a polyol containing one or more anionic salt groups, such as a carboxylate and sulfonate salt groups or acid groups which may be converted to an anionic salt group, such as carboxylic acid or sulfonic acid groups. Preferred are hydroxycarboxylic acids represented by the general formula (HO)ₓR(COOH)_{y}, wherein R represents a straight or branched hydrocarbon residue having 1 to 12 carbon atoms, and x and y independently are integers from 1 to 3. Examples of these hydroxycarboxylic acids include citric acid, malic acid, lactic acid and tartaric acid. The most preferred hydroxycarboxylic acids are the α,α-dimethylolalkanoic acids, wherein x=2 and y=1 in the above general formula, such as for example, 2,2-dimethylolpropionic acid and 2,2-dimethylolbutanoic acid.

The amount hydrophilic compound (iii) generally is from 1 to 25% by weight of the polyurethane pre-polymer (A), preferably of from 4 to 10% by weight.

By (meth)acrylic compounds (iv) and (iv') are meant to designate in the present invention compounds comprising at least one (meth)acrylic group and one nucleophilic function capable of reacting with isocyanate, preferably an hydroxyl group. Preferred are (meth)acryloyl mono-hydroxy compounds, more particularly poly(meth)acryloyl mono-hydroxy compounds. Acrylates are particularly preferred.

Useful compounds (iv) and (iv') include the esterification products of aliphatic and aromatic polyols with (meth)acrylic acid having a residual average hydroxyl functionality of about 1. The partial esterification products of (meth)acrylic acid with tri-, tetra-, penta- or hexahydric polyols or mixtures thereof are preferred. In this context, it is also possible to use reaction products of such polyols with ethylene oxide and/or propylene oxide or mixtures thereof, or reaction products of such polyols with lactones, which add to these polyols in a ring-opening reaction. Examples of suitable lactones are γ-butyrolactone and, in particular δ-valerolactone and ε-caprolactone. These modified or unmodified polyols are partly esterified with acrylic acid, methacrylic acid or mixtures thereof until the desired residual hydroxyl functionality is reached.

Suitable compounds are the (meth)acrylic esters with linear and branched polyols in which at least one hydroxy functionality remains free, like hydroxyalkyl(meth)acrylates having 1 to 20 carbon atoms in the alkyl group. Preferred molecules in this category are hydroxyethyl (meth)acrylate, hydroxypropyl (meth)acrylate, hydroxybutyl (meth)acrylate. Particularly preferred are compounds comprising at least two (meth)acryl functions such as glycerol diacrylate, trimethylolpropane diacrylate, glycerol diacrylate, pentaerythritol triacrylate, ditrimethylolpropane triacrylate, dipentaerythritol pentaacrylate and their (poly)ethoxylated and/or (poly)propoxylated equivalents.

By water-dilutable (meth)acrylates (B2) is meant to designate (meth)acrylates that permit to form a homogeneous, single phase mixture with at least 15 wt% of water in the total mass of water and (meth)acrylate (B2). Preferred (meth)acrylates (B2) are those which are dilutable with up to 30 wt% of water, more preferably up to 45 wt% of water.

The water-dilutable (meth)acrylates (B2) are preferably selected from epoxy (meth)acrylates and polyether (meth)acrylates and mixtures thereof, especially those comprising at least 2 (meth)acrylate groups.

More preferred are polyether (meth)acrylates, especially the (meth)acrylates of alkoxylated low molecular weight polyols. By low weight polyols is meant to designate polyols comprising at least 2 hydroxyl functions and having a molecular weight of less than 400, such as glycerol, trimethyolpropane, di-trimethylolpropane, pentaerythritol, di-pentaerythritol and bisphenols.

Alkoxylated polyols having an equivalent ratio of oxygen to carbon of at least 0.2, preferably of at least 0.25 and more preferably of at least 0.33, are particularly preferred.

Particularly preferred water-dilutable (meth)acrylates (B2) are (meth)acrylates of ethoxylated polyols, especially glycerol.

Water-dilutable (meth)acrylates are known. Suitable products include those commercialized under the name of EBECRYL®11, EBECRYL®12, EBECRYL®13 and EBECRYL®2047.

The compositions according to the invention can contain other compounds. According to a specific embodiment of the invention, the composition also contains at least one (meth)acrylic copolymer (C), especially a non-(meth)acrylated acrylic copolymer. The (meth)acrylic copolymer may be added to the composition separately or together with one of the other compounds (A) and/or (B). Water-dispersible and water-dilutable random, alternating and block (meth)acrylic copolymers are preferred, especially those obtained from 0.5 to 25 %by weight of one or more monofunctional (meth)acrylic monomer(s) with pendant carboxylic acid or anhydride groups, such as (meth)acrylic acid, beta-carboxyethyl acrylate, maleic anhydride, citraconic anhydride, itaconic anhydride, from 0.5 to 25 % by weight of one or more monofunctional (meth)acrylic monomer(s) with pendant hydroxyl group, such as 2-hydroxyethyl (meth)acrylate, hydroxypropyl (meth)acrylate, 5-hydroxypentyl (meth)acrylate and diethyleneglycol mono(meth)acrylate, from 15 to 70 % by weight of one or more monofunctional alkyl or aryl (meth)acrylate monomer, such as butyl (meth)acrylate, hexyl(meth)acrylate, isobornyl(meth)acrylate, octyl/decyl (meth)acrylate, and from 0.5 to 50 % by weight of one or more other monofunctional vinylic monomer such as styrene, α-methylstyrene, vinylethers. Water-dispersible and water-dilutable (meth)acrylic copolymers which are dilutable or dispersible up to 25 weight % of solids content without further chemical modification or up to 60 % following neutralization of the pendant carboxylic acid or anhydride groups with the aid of a base, are particularly preferred.

The composition according to the invention generally contains from 20 to 80 % by weight of prepolymer (A), relative to the total weight of compounds (A) and (B), and optionally (C).

The composition according to the invention generally contains from 20 to 80 % by weight of (B), relative to the total weight of compounds (A) and (B), and optionally (C). When present, the composition according to the invention generally contains from 5 to 50 % by weight of compound (C), relative to the total weight of compounds (A), (B) and (C).

The aqueous composition generally comprises from 1 to 50 %, preferably from 5 to 40 %, by weight of compound (A).

The aqueous composition generally comprises from 1 to 50 %, preferably from 5 to 40 %, by weight of compound (B).

When present, the composition according to the invention generally contains from 5 to 40 % by weight of compound (C).

Besides compounds (A) and (B), and optionally (C), the aqueous composition may also contain additives (D) such as stabilizers, adhesion promoters, amine functional acrylate co-initiators, flow and leveling agents, silicone free slip agents and antimisting additives. Especially when used for making inks, pigments may be added to the composition.

The aqueous compositions of the invention generally have a total solids content defined as the total content of compounds (A) and (B), and optionally (C) and/or (D) and/or pigments, of from about 30 to 60 wt %, preferably from about 35 to 45 wt%.

The aqueous compositions of the invention usually contains from 40 to 70 % of water. The radiation-curable compositions according to the present invention are curable by ultraviolet irradiation, generally in the presence of photoinitiator. Usually from 0.5 to 12 % by weight of photoinitiator may be added to the composition. The compositions can also be cured by electron-beam irradiation, allowing the use of compositions free of photoinitiator.

The compositions according to the invention present low viscosity, low shrinkage during curing, low residual stress and a good adhesion on different substrates. They also provide high gloss, high resistance to abrasion, scratch, alcohol, household cleaners and detergents.

The compositions of this invention containing a water-dispersible polyurethane (B1) as defined here above are particularly suitable for use in ink and tack-free coatings and may be dried (to the touch) with air movement, either at room temperature or heated, after printing but before being exposed to actinic radiation. The advantage of this approach is the freedom to use these compositions on printing equipment where the printed ink film must traverse a guide or tension roller before being exposed to actinic energy for cure such as on in-line or stack, narrow-web and mid-web flexographic presses and on gravure presses.

The compositions according to the present invention are compatible with liquid pigment dispersions or predispersed pigment concentrates which are commercially available from various suppliers without issues of incompatibility and phase separation.

The present invention provides compositions and final products with very good viscosity stability and resistance to phase separation for up to six months at room temperature.

The present invention provides compositions which do not rely on the presence of water for desired line speed or ink/coating trap. Since the water is removed before cure with actinic energy, the resultant printed ink or coating is block resistant, with high gloss and with high resistance to chemicals and common household cleaners.

The compositions according to the present invention provide extended press and print stability with relatively low printing viscosity, typically < 250 cP at 25 °C and preferably < 100 cP at 25 °C, and with gloss and resistance properties superior to conventional waterborne or neutral pH systems. The present invention was tested for press and print stability by leaving the blended ink or coating on a flexographic printing press for an extended period of time. No printing was completed during this time. After the time period printing was resumed and the ink or coating was resoluble in the liquid mass and the resultant print was acceptable for quality.

The compositions according to the invention provide low viscosity similar to that of conventional waterborne overprint varnishes along with increased gloss and resistance properties without chemical crosslink agent so pot/shelf life is virtually unlimited.

The compositions according to the invention provide increased adhesion over waterborne inks in order to obtain high gloss and resistance properties.

It is well know that oil-based litho inks are overprinted with UV/EB overprint varnish. However, this combination typically results in loss of gloss due to poor compatibility of the UV/EB overprint varnish and the oil-based litho inks. This phenomenon is described as glossback in the graphic arts industry. It is also well know that the use of a waterborne primer between the oil-based inks and the UV/EB overprint varnish significantly reduces the incidence of glossback. The compositions according to the present invention present good compatibility with oil-based inks, making them suitable as overprint varnishes for such inks that when the water is removed and the overprint varnish is cured with UV/EB energy result in coatings with high gloss with high resistance properties. This approach eliminates the need for one of the steps in the manufacturing process used to address the phenomenon known as glossback, thereby reducing cost and increasing productivity.

The compositions according to the invention containing a water-dilutable methacrylate (B2) as defined here above are particularly suitable for use as overprint varnish and provide high gloss.

The compositions according to the invention are suitable for making inks and overprint varnishes. The compositions according to the invention are particularly suitable for use in inks and overprint varnishes which are printed by flexographic and gravure methods on paper, board and filmic substrates. The flexographic and gravure products containing the compositions according to the inventions are cured after printing by removal of the water from the printed film followed by irradiation.

The present invention therefore also relates to the use of the compositions for making inks or varnishes and to a process for making inks or varnishes wherein a composition as described here above is used.

The present invention further relates to inks and varnishes comprising a composition according to the invention.

The examples which will follow illustrate the invention without limiting it.

### Example 1:

A composition was made by blending 1,400 g of an aqueous aromatic acrylic polyurethane dispersion, comprising 23 wt% of an acrylated polyurethane obtained from the reaction of a polyesterdiol, dimethylolpropionic acid, an aromatic diol, TDI and acrylated with ditrimethylolpropane triacrylate, and 13 wt% of acrylic copolymer, with 600 g of an aliphatic urethane acrylate solution in water comprising 50 wt% of an urethane acrylate obtained from the reaction of a 55 wt% of a polyester polyol comprising 61 wt % of polyethyleneglycol and 12 wt% of sulfoisophthalic acid with 30 weight % of IPDI and acrylated with hydroxyethylacrylate.

An ink was made by mixing 600 g of the above mentioned composition with 480 g of a pigment dispersion and 120 g of a photoinitiator.

The ink was used to print on a paper and a polypropylene substrate using a COMCO® flexographic press. Water was removed from the printed ink with forced, heated air. The ink was dry as tested by finger rub on the print. The dry printed films were subsequently cured with UV radiation.

The resultant prints were examined and the results compared with conventional solution and emulsion inks as shown in table 1.

Rub resistance was measured with a Sutherland rub tester. The resistance to cleaner and solvents were determined by wetting the cotton tip of a cotton tipped applicator and employing light finger pressure to rub the ink off as visually detected by a break in the surface of the ink. Adhesion was tested by taking a convenient length of 300 or 610 tape from 3M, laminating the tape to the cured surface under finger pressure, then lifting the tape from the surface in one rapid motion at right angle to the coated surface. The adhesion was rated a pass when the coating remained completely intact and adhered to the substrate following tape peel.

### Example 2 :

A composition was made by blending 1,000 g of ethoxylated glycerol triacrylate comprising on average 12 ethoxy groups with 1,000 g of the aliphatic urethane acrylate solution in water as described in Example 1.

An overprint varnish was made by mixing 1,800 g of the above mentioned composition with 200 g of a photoinitiator.

The overprint varnish was used to print over the inks described in Example 1 on a paper and a polypropylene substrate using a COMCO® flexographic press. The water was removed with forced, heated air and the overprint varnish was then cured with UV radiation.

The overprint varnish was not dry to the touch after water removal by design in order to obtain a high gloss.

The resultant prints were tested and the results compared with those obtained with conventional solution and emulsion resins as shown in table 1.

### Example 3 :

Example 2 was repeated except that a composition comprising a mixture of 1,720 g of an aliphatic polyester polyurethane and acrylic copolymer dispersion with 280 g of an aliphatic urethane acrylate solution in water as described in Example 1, was used.

The overprint varnish was dry to the touch after water removal. The resultant prints were tested and the results compared with those obtained with conventional solution and emulsion resins as shown in table 1.

### Example 4:

A composition was made by blending 19 g of an aliphatic urethane acrylate solution as described in Example 1 with 75 g of an acrylated polyurethane dispersion comprising 40 wt% of an acrylated polyurethane obtained from the reaction of HDI, dimethylolpropionic acid, the diacrylate of ethoxylated trimethylolpropane such as described in US 5,596,065 for 5 minutes, then 6 g of photoinitiator was added and the mixture was blended for another 2 minutes. The mixture had a viscosity of 19 seconds Zahn #3 at 25°C. The mixture was viscosity stable for at least 24 hours.

This composition was applied to paper substrate with a hand-held applicator rod. Water was removed from the printed composition with forced, heated air. The print was touch-dry as tested by finger rub on the print. The dry printed film was subsequently cured with UV radiation. The resultant print had a gloss of greater than 65 at 60 degrees.

### Example 5 :

Example 4 was repeated except that 9 g of aliphatic urethane acrylate solution and 85 g of acrylated polyurethane dispersion were used.

The mixture had a viscosity of 12.5 seconds Zahn #3 at 25°C. The mixture was viscosity stable for at least 24 hours.

This composition was applied to paper substrate with a hand-held applicator rod. Water was removed from the printed composition with forced, heated air. The print was touch-dry as tested by finger rub on the print. The dry printed film was subsequently cured with UV radiation. The resultant print had a gloss of greater than 65 at 60 degrees.

### Example 6 :

A composition was made by blending 10 g of an aliphatic urethane acrylate solution as described in Example 1 with 60 g of an acrylated polyurethane dispersion as described in Example 4 for 5 minutes, then 20 g of ethoxylated polyether triacrylate as described in Example 2 was added and the mixing was continued for another 5 minutes. Then 10 g of photoinitiator was added and the mixture was blended for another 2 minutes. The mixture had a viscosity of 15 seconds Zahn #3 at 25°C. The mixture was viscosity stable for at least 24hours.

This composition was applied to paper substrate with a hand-held applicator rod. Water was removed from the printed composition with forced, heated air. The print was not touch-dry as tested by finger rub on the print. The dry printed film was subsequently cured with UV radiation. The resultant print had a gloss of greater than 75 at 60 degrees.

### Example 7 :

Example 3 was repeated except that 50 g of aliphatic polyester polyurethane and acrylic copolymer dispersion and 40 g of aliphatic urethane acrylate solution were used, together with 10 g of photoinitiator.

The mixture had a viscosity of 20 seconds Zahn #3 at 25°C. The mixture was viscosity stable for at least 24hours.

This composition was applied to paper substrate with a hand-held applicator rod. Water was removed from the printed composition with forced, heated air. The print was touch-dry as tested by fmger rub on the print. The dry printed film was subsequently cured with UV radiation. The resultant print had a gloss of greater than 65 at 60 degrees.

### Example 8 :

A mixture containing 47 g of aliphatic urethane acrylate solution and 47 g of ethoxylated polyether triacrylate as described in Example 2 was blended for 5 minutes.

Then 3 g of photoinitiator were added and mixing was continued for 2 minutes and then 3 g of methyl diethanol amine were added and mixing was continued for another 2 minutes.

The mixture had a viscosity of 14.5 seconds Zahn #3 at 25°C. The mixture was viscosity stable for at least 24 hours.

This composition was printed on a paper substrate with a hand held laboratory anilox test equipment. Hot air was applied to remove volatile material and the print was then exposed to actinic radiation for cure. The resultant print presented good tape adhesion, gloss, rub resistance and lay/leveling.

### Example 9 :

Example 8 was reproduced except that the composition contained 43 g of aliphatic urethane acrylate solution, 43 g of ethoxylated polyether triacrylate, 5 g of photoinitiator, 5 of acrylated amine and 5 g of a polyether modified polysiloxane compound.

Reactivity, adhesion, water resistance and rub resistance were similar to those obtained with the composition of Example 8 ; gloss was lower and lay/leveling was superior to the results obtained in Example 8.

### Example 10 :

10 g of the acrylated urethane solution, 20 g of the ethoxylated polyether triacrylate and 60 g of the acrylated polyurethane dispersion as described in Examples 1 and 2 were blended at room temperature for 5 minutes. 10 g of photoinitiator was further added. The mixture had a viscosity of 15 seconds Zahn #3 at 25°C. The mixture was viscosity stable for at least 24 hours.

This composition was printed on a paper substrate with a hand held laboratory anilox test equipment. Hot air was applied to remove volatile material and the print was then exposed to actinic radiation for cure. The resultant print presented excellent lay/leveling, heat resistance, rub resistance and adhesion along with acceptable gloss and water resistance.

### Comparative example 11R :

60 g of an acrylated polyurethane dispersion as described in Example 1 and 30 g of polyether tetraacrylate commercialized under the name of EBECRYL®40 were blended at room temperature for 5 minutes. Then 10 g of photoinitiator were added and mixing was continued for 2 minutes.

The mixture had unacceptable viscosity and was not suited for printing as described here above.

### Comparative example 12 R :

Comparative example 11R was reproduced except that 30 g of ditrimethylolpropane tetraacrylate were used instead of polyether tetraacrylate.

The mixture had unacceptable viscosity and was not suited for printing as described here above.

**Table 1**

| Example (on paper substrate) | Ink of Ex. 1 (No OPV) | Ink of Ex.1 & OPV of Ex.2 | Ink of Ex. 1 & OPV of Ex. 3 | Ink with conventional solution and emulsion (No OPV) | Ink & OPV with conventional solution and emulsion |
|---|---|---|---|---|---|
| Rub resistance | 5 | 7 | 7 | 2 | 3 |
| Gloss | 68.2 | 72.3 | 68.3 | 53.4 | 70.1 |
| Resistance to 409®cleaner | 17 cycles | 35 cycles | 50 cycles | 2 cycles | 3 cycles |
| Resistance to isopropanol | 9 cycles | 35 cycles | 45 cycles | 5 cycles | 8 cycles |
| Resistance to methylethylketone | 1.5 cycles | 4 cycles | 5 cycles | 1 cycle | 1 cycle |
| Adhesion | 10 | 10 | 10 | 10 | 10 |

Adhesion & Rub resistance: 1=poor (significant removal) - 10=good (slight/no removal) Resistance to 409®cleaner, isopropanol and methylethylketone: the higher the number of cycles, the higher the resistance.

### Example 13 :

A composition was made by blending 140 g of an aqueous aromatic acrylic polyurethane dispersion comprising 23 wt% of an acrylated polyurethane obtained from the reaction of a polyesterdiol, dimethylolpropionic acid, an aromatic diol, TDI and acrylated with ditrimethylolpropane triacrylate with 600 g of an aliphatic urethane acrylate solution as described in Example 1.

An ink was made by mixing 50 g of the above mentioned composition with 40 g of a pigment dispersion and 10 g of a photoinitiator. The ink was compared to the one obtained in Example 1 on a paper and on a polypropylene substrate. Water was removed from the printed inks with forced, heated air. The inks were dry as tested by finger rub on the print. The dry printed ink films were subsequently cured with UV radiation. The ink from Example 13 was observed to have faster reactivity as demonstrated by achieving a mar-free state before the ink from Example 1 under equal conditions of irradiation. Both ink had equal visual gloss and equal adhesion. Adhesion was tested by taking a convenient length of 300 or 610 tape from 3M, laminating the tape to the cured surface under finger pressure, then lifting the tape from the surface in one rapid motion at right angle to the coated surface.

### Example 14

A composition was made by blending 86 g of the aqueous polyurethane dispersion described in Example 13 with 14 g of the aliphatic urethane acrylate solution as described in Example 1. An overprint varnish was made by mixing 90 g of the above mentioned composition with 10 g of a photoinitiator.

The overprint varnish from Example 14 was compared to the overprint varnish from Example 3 by printing with a hand-held anilox roll test equipment on Leneta® cards. The prints were exposed to heated, forced air after printing to remove water. Both prints were touch dry after water removal. The dried prints were exposed to UV radiation using a lab Aetek® curing unit and tested/observed for properties. The overprint varnish from Example 14 displayed higher reactivity as determined by achieving a mar-free state with less actinic radiation and was more scratch resistant as tested with the back of a fingernail. Both overprint varnishes had equal visual gloss and equal tape adhesion.

## Claims

1. An aqueous radiation-curable composition comprising
- from 5 to 95 % by weight, relative to the total weight of (A) and (B), of at least one water-dilutable (meth)acrylated urethane (A) containing at least one polyethylene glycol segment and at least one pendant hydrophilic group, and
- from 5 to 95 % by weight, relative to the total weight of (A) and (B), of at least one other (meth)acrylated compound (B) selected from the group of water-dispersible (meth)acrylated polyurethanes (B1), water-dilutable (meth)acrylates (B2) different from the (meth)acrylated urethane (A), and mixtures thereof.

2. Radiation curable composition according to claim 1, wherein the water-dilutable (meth)acrylated urethane (A) is obtained from the reaction of at least one polyisocyanate compound (i), at least one polyester polyol (vi) comprising at least one polyethylene glycol segment and at least one pendant hydrophilic group, and at least one (meth)acrylated compound (iv) containing at least one reactive group capable to react with isocyanate groups.

3. Radiation curable composition according to claim 2, wherein the polyester polyol (iv) contains from 20 to 80 % by weight of polyethylene glycol segments and from 5 to 20 % by weight of a compound containing at least one hydrophilic group.

4. Radiation curable composition according to any of claims 1 to 3, wherein the water-dispersible (meth)acrylated polyurethane (B1) is obtained from the reaction of :
- at least one polyisocyanate compound (i'),
- optionally, at least one polyol (ii'),
- at least one hydrophilic compound (iii) containing at least one reactive group capable to react with isocyanate groups and which is capable to render the polyurethane dispersible in aqueous medium either directly or after the reaction with a neutralizing agent to provide a salt,
- at least one (meth)acrylated compound (iv') containing at least one reactive group capable to react with isocyanate groups.

5. Radiation curable composition according to any of claims 1 to 4, wherein the water-dilutable (meth)acrylates (B2) are selected from epoxy (meth)acrylates and polyether (meth)acrylates and mixtures thereof.

6. Radiation curable composition according to claim 5, wherein the water-dilutable (meth)acrylate (B2) is selected from ethoxylated glycerol (meth)acrylates.

7. Radiation curable composition according to any of claims 1 to 6 containing at least one (meth)acrylic copolymer (C) and/or at least one additive (D) and/or at least one pigment.

8. Radiation curable composition according to claim 7 comprising a total solids content defined as the total content of compounds (A) and (B), and optionally (C) and/or (D) and/or pigments, of from 30 to 60 wt %.

9. Ink or varnish comprising a radiation curable composition according to any of claims 1 to 8.

10. Use of an ink or varnish according to claim 9 for flexographic printing or gravure printing.

## Patentansprüche

1. Wässerige strahlungshärtbare Zusammensetzung, umfassend
- 5 bis 95 Gewichtsprozent, bezogen auf das Gesamtgewicht von (A) und (B), von mindestens einem wasserverdünnbaren (meth)acrylierten Urethan (A), enthaltend mindestens ein Polyethylenglycolsegment und mindestens eine hydrophile Seitengruppe, und
- 5 bis 95 Gewichtsprozent, bezogen auf das Gesamtgewicht von (A) und (B), von mindestens einer anderen (meth)acrylierten Verbindung (B), ausgewählt aus der Gruppe von wasserdispergierbaren (meth)acrylierten Polyurethanen (B1), wasserverdünnbaren (Meth)acrylaten (B2), die sich von dem (meth)acrylierten Urethan (A) unterscheiden, und Gemischen davon.

2. Strahlungshärtbare Zusammensetzung nach Anspruch 1, wobei das wasserverdünnbare (meth)acrylierte Urethan (A) aus der Umsetzung von mindestens einer Polyisocyanatverbindung (i), mindestens einem Polyesterpolyol (vi), umfassend mindestens ein Polyethylenglycolsegment und mindestens eine hydrophile Seitengruppe, und mindestens einer (meth)acrylierten Verbindung (iv), enthaltend mindestens eine reaktive Gruppe, die mit Isocyanatgruppen reagieren kann, erhalten wird.

3. Strahlungshärtbare Zusammensetzung nach Anspruch 2, wobei das Polyesterpolyol (iv) 20 bis 80 Gewichtsprozent Polyethylenglycolsegmente und 5 bis 20 Gewichtsprozent einer Verbindung, enthaltend mindestens eine hydrophile Gruppe, enthält.

4. Strahlungshärtbare Zusammensetzung nach einem der Ansprüche 1 bis 3, wobei das wasserdispergierbare (meth)acrylierte Polyurethan (B1) aus der Umsetzung von:
- mindestens einer Polyisocyanatverbindung (i'),
- gegebenenfalls mindestens einem Polyol (ii'),
- mindestens einer hydrophilen Verbindung (iii), enthaltend mindestens eine reaktive Gruppe, die mit Isocyanatgruppen reagieren kann und die das Polyurethan in einem wässerigen Medium direkt oder nach der Umsetzung mit einem Neutralisationsmittel unter Lieferung eines Salzes dispergierbar machen kann,
- mindestens einer (meth)acrylierten Verbindung (iv'), enthaltend mindestens eine reaktive Gruppe, die mit Isocyanatgruppen reagieren kann,
erhalten wird.

5. Strahlungshärtbare Zusammensetzung nach einem der Ansprüche 1 bis 4, wobei die wasserverdünnbaren (Meth)acrylate (B2) aus Epoxy-(meth)acrylaten und Polyether-(meth)acrylaten und Gemischen davon ausgewählt sind.

6. Strahlungshärtbare Zusammensetzung nach Anspruch 5, wobei das wasserverdünnbare (Meth)acrylat (B2) aus ethoxylierten Glycerol-(meth)acrylaten ausgewählt ist.

7. Strahlungshärtbare Zusammensetzung nach einem der Ansprüche 1 bis 6, enthaltend mindestens ein (Meth)acrylcopolymer (C) und/oder mindestens ein Additiv (D) und/oder mindestens ein Pigment.

8. Strahlungshärtbare Zusammensetzung nach Anspruch 7, umfassend einen Gesamtfeststoffgehalt, definiert als der Gesamtgehalt von Verbindungen (A) und (B) und gegebenenfalls (C) und/oder (D) und/oder Pigmenten, von etwa 30 bis 60 Gew.-%.

9. Tinte oder Lack, umfassend eine strahlungshärtbare Zusammensetzung nach einem der Ansprüche 1 bis 8.

10. Verwendung einer Tinte oder eines Lackes nach Anspruch 9 für den Flexodruck oder Tiefdruck.

## Revendications

1. Composition aqueuse durcissable sous rayonnement, comprenant :
- de 5 % à 95 % en poids, par rapport au poids total de (A) et de (B), d'au moins un uréthane (méth)acrylé (A) pouvant être dilué dans l'eau et contenant au moins un segment de polyéthylène glycol et au moins un groupe hydrophile pendant, et
- de 5 % à 95 % en poids, par rapport au poids total de (A) et de (B), d'au moins un autre composé (méth)acrylé (B) choisi dans le groupe comprenant les polyuréthanes (méth)acrylés (B1) dispersibles dans l'eau, les (méth)acrylates (B2) pouvant être dilués dans l'eau et différents de l'uréthane (méth)acrylé (A), et leurs mélanges.

2. Composition durcissable sous rayonnement selon la revendication 1, dans laquelle l'uréthane (méth)acrylé (A) pouvant être dilué dans l'eau est obtenu à partir de la réaction d'au moins un composé de polyisocyanate (i), d'au moins un polyester polyol (vi) comprenant au moins un segment de polyéthylène glycol et au moins un groupe hydrophile pendant et d'au moins un composé (méth) acrylé (iv) contenant au moins un groupe réactif capable de réagir avec des groupes isocyanate.

3. Composition durcissable sous rayonnement selon la revendication 2, dans laquelle le polyester polyol (iv) contient de 20 % à 80 % en poids de segments de polyéthylène glycol et de 5 % à 20 % en poids d'un composé contenant au moins un groupe hydrophile.

4. Composition durcissable sous rayonnement selon l'une quelconque des revendications 1 à 3, dans laquelle le polyuréthane (méth)acrylé (B1) dispersible dans l'eau est obtenu à partir de la réaction :
- d'au moins un composé de polyisocyanate (i'),
- facultativement, d'au moins un polyol (ii'),
- d'au moins un composé hydrophile (iii) contenant au moins un groupe réactif capable de réagir avec des groupes isocyanate et qui est capable de rendre le polyuréthane dispersible dans un milieu aqueux soit directement, soit après réaction avec un agent de neutralisation pour obtenir un sel,
- d'au moins un composé (méth)acrylé (iv') contenant au moins un groupe réactif capable de réagir avec des groupes isocyanate.

5. Composition durcissable sous rayonnement selon l'une quelconque des revendications 1 à 4, dans laquelle les (méth)acrylates (B2) pouvant être dilués dans l'eau sont choisis parmi les époxy(méth)acrylates et le polyéther(méth)acrylates et leurs mélanges.

6. Composition durcissable sous rayonnement selon la revendication 5, dans laquelle le (méth)acrylate (B2) pouvant être dilué dans l'eau est choisi parmi les glycérol(méth)acrylates éthoxylés.

7. Composition durcissable sous rayonnement selon l'une quelconque des revendications 1 à 6, contenant au moins un copolymère (méth)acrylique (C) et/ou au moins un additif (D) et/ou au moins un pigment.

8. Composition durcissable sous rayonnement selon la revendication 7, comprenant une teneur totale en solides définie par la teneur totale en composés (A) et (B), et facultativement en (C) et/ou en (D) et/ou en pigments, de 30 % à 60 % en poids.

9. Encre ou vernis comprenant une composition durcissable sous rayonnement selon l'une quelconque des revendications 1 à 8.

10. Utilisation d'une encre ou d'un vernis selon la revendication 9, en impression flexographique ou en héliogravure.
